# EUROPEAN PATENT APPLICATION

(11) **EP 3 098 346 A1**
(43) Date of publication of application: **30.11.2016**
(21) Application number: 15741049.9
(22) Date of filing: 23.01.2015
(51) Int. Cl.: D06Q 1/10, D06Q 1/00

(54) **RHINESTONE FEEDING APPARATUS**

(30) Priority: 23.01.2014 KR 20140008101
(71) Applicant: Ninestone Co., Ltd., Gyeongsangnam-do 50561 (KR)
(72) Inventor: PARK, Hong-gyu, Yangsan-si Gyeongsangnam-do 626-010 (KR)
(74) Representative: Taor, Simon Edward William
(86) International application number: PCT/KR2015/000736
(87) International publication number: WO 2015/111956

(57) **Abstract**

The present invention relates to an apparatus for feeding rhinestones. An object of the present invention is to provide an apparatus for feeding rhinestones, which costs low with simple elements and structures and remarkably speeds work up with less possibility of operation errors. To this end, the apparatus for feeding rhinestones includes: a main body; a dispenser which is supported on the main body, includes a flat bottom surface and a discharging skirt, is driven to move the discharging skirt for discharging within a plane including the bottom surface along a tangential direction of the discharging skirt, and includes a guide groove on the bottom surface in an acute direction to a moving direction the discharging skirt from the discharging skirt, in which a width of the guide groove is larger than a diameter of the adhesive flat surface of the rhinestone and a depth of the guide groove is smaller than a height of the protruding end portion; a rhinestone feeder which presses and feeds the rhinestones toward the bottom surface of the dispenser; and a driver which drives the dispenser.

## Description

### [TECHNICAL FIELD]

The present invention relates to an apparatus for feeding rhinestones.

### [BACKGROUND ART]

A rhinestone, which is a fake jewel to be attached to clothes or the like textile for decorations, includes an adhesive flat surface forming an adhesive surface against the surface of the textile, and a protruding end portion formed at an opposite side to the adhesive flat surface and having a relatively narrow surface. To attach the rhinestones to clothes and accessories in a predetermined decorative pattern, a plurality of rhinestones are first attached to an adhesive sheet along the pattern and then transferred to a surface of a target object by applying heat thereto. At this time, the protruding end portion of the rhinestone is attached to the adhesive sheet, and glue to be melt by heat to have adhesive strength is previously applied to the adhesive flat surface of the rhinestone.

Conventionally, work of patterning and attaching the rhinestones on to the adhesive sheet has been generally undertaken by man. Thus, there have been many attempts to automate this work. The conventional automation system employs a method of first picking up the rhinestone at the side of the protruding end portion by an air suction device, picking up the rhinestone at the side of the adhesive flat surface while being transferred to another air suction device, and attaching the rhinestone to the adhesive sheet. This method is actually unavoidable since the adhesive flat surface having a wide surface tends to face downward but the protruding end portion having the narrow surface tends to face upward in terms of the shape of the rhinestones.

Therefore, a conventional automated apparatus for feeding the rhinestones needs a wide space since a moving line of pick-up and transfer is long, has a complicated structure and costs high since it does an elaborate work, and speeds work down with operation errors and frequent troubles.

### [DISCLOSURE]

### [TECHNICAL PROBLEM]

Accordingly, an object of the present invention is to provide an apparatus for feeding rhinestones, which costs low with simple elements and structures and remarkably speeds work up with less possibility of operation errors.

### [TECHNICAL SOLUTION]

The foregoing aspects are achieved by providing an apparatus for feeding rhinestones, including: a main body; a dispenser which is supported on the main body, includes a flat bottom surface and a discharging skirt, is driven to move the discharging skirt for discharging within a plane including the bottom surface along a tangential direction of the discharging skirt, and includes a guide groove on the bottom surface in an acute direction to a moving direction the discharging skirt from the discharging skirt, in which a width of the guide groove is larger than a diameter of the adhesive flat surface of the rhinestone and a depth of the guide groove is smaller than a height of the protruding end portion; a rhinestone feeder which presses and feeds the rhinestones toward the bottom surface of the dispenser; and a driver which drives the dispenser.

Here, the discharging skirt may be circular, and the dispenser may rotate with respects to a center axis of the discharging skirt, thereby improving efficiency and accuracy in successively feeding the rhinestones as the dispenser moves.

Further, the main body may include a discharge preventing wall adjacent to the discharging skirt and preventing the rhinestones from being discharged, and the discharge preventing wall may include at least one discharging portion for allowing the rhinestone to be discharged through the discharging skirt along the guide groove, thereby discharging the rhinestones to a certain region with a simple structure.

Further, the discharging portion may include a receiver to receive a rhinestone discharged from the dispenser, thereby advantageously processing the rhinestone discharged from the dispenser.

Here, the receiver may include a guide tube to guide the rhinestone to move down, thereby preventing the rhinestone from being shaken and turned over when it moves down.

In addition, the receiver may include a suction nozzle tube for catching the rhinestone from above, a compressor for sucking air through the suction nozzle tube, and a nozzle tube moving portion to move the suction nozzle tube, thereby effectively dealing with the rhinestone fed from the dispenser.

### [ADVANTAGEOUS EFFECTS]

The apparatus for feeding rhinestones according to the present invention costs low since its elements and structures are simplified, and remarkably speeds work up since possibility of operation errors is low and there is no need of using a plurality of air suction devices to turn over the rhinestones.

### [DESCRIPTION OF DRAWINGS]

FIG. 1 is a perspective view of an apparatus for feeding rhinestones according to the present invention,
FIG. 2 is a perspective view of showing that a main body and a rotary body are disassembled,
FIG. 3 is a cross-section view taken along line III-III of FIG. 1,
FIG. 4 is a cross-section view taken along line IV-IV of FIG. 3,
FIG. 5 (A) and (B) are cross-section views taken along line V-V of FIG. 4,
FIG. 6 illustrates another embodiment of a discharge preventing wall based on the cross section taken along line VI-VI of FIG. 4,
FIG. 7 illustrates a rhinestone dispenser according to another embodiment, and
FIG. 8 (A) and (B) illustrate a rhinestone receiver according to another embodiment.

### [BEST MODE]

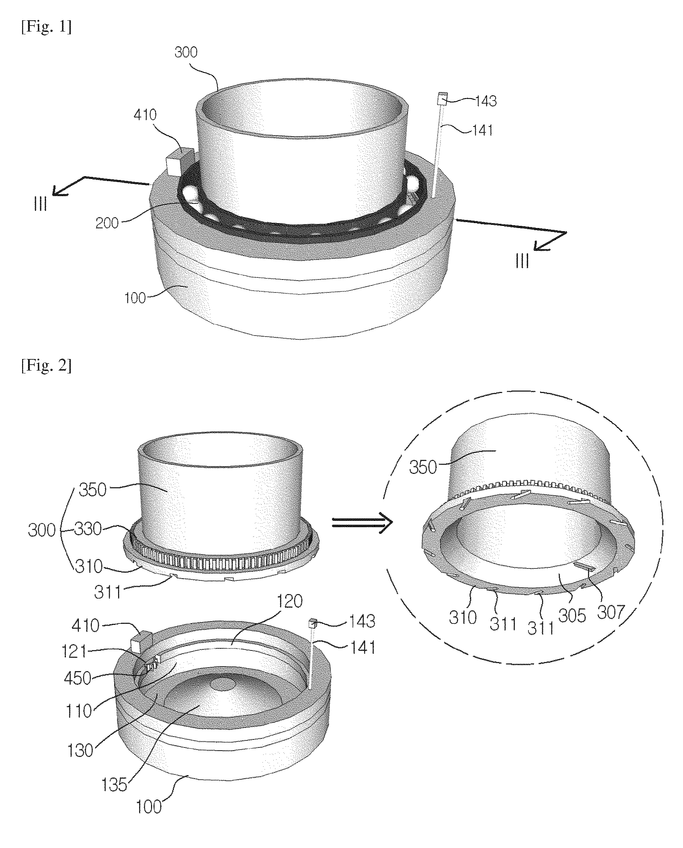

FIG. 1 is a perspective view of an apparatus for feeding rhinestones according to the present invention. As shown in FIG. 1, the apparatus for feeding rhinestones includes a main body 100 having a cylindrical shape, and a rotary body 300 having a cylindrical shape and coaxially inserted in the main body 100. In addition, a bearing 200 is provided in between the main body 100 and the rotary body 300 so that the rotary body 300 can rotate against the main body 100. The rotary body 300 rotates with respect to an axial line of a height direction.

FIG. 2 is a perspective view of showing that the main body 100 and the rotary body 300 are separated from each other. In FIG. 2, the bearing 200 is not illustrated. As shown in FIG. 2, the main body 100 is shaped like a cylinder having a lateral wall 110 and a bottom 130, and is also shaped like a container opened upward. Further, a diffusing guide 135 protrudes in the height direction on a center portion of the bottom 130, and guides many rhinestones accommodated in the main body 100 to be diffused toward an outer edge region.

In a middle end portion of the lateral wall 110, a projection rib 120 protrudes inward in a radial direction and makes the bearing 200 be stably settled. The bearing 200 is supported on the projection rib 120. The projection rib 120 is formed with a pinion receiver 121 at a certain portion to receive a pinion 450. The pinion 450 is received in the pinion receiver 121 and rotatable with respect to the axial direction in the height direction. Further, the pinion 450 is connected to and driven by a motor 410 installed at an upper portion of the main body.

The rotary body 300 includes a cylindrical portion 350 having a cylindrical shape, a gear 330 extended from a lower portion of the cylindrical portion 350 outward in the radial direction, and the dispenser 310 extended from a lower portion of the gear 330 outward in the radial direction. The rotary body 300 is shaped like a tube, an inside of which communicates along the height direction, and is coaxially accommodated in the main body 100 and rotatable against the stationary main body 100 with respect to the axial line of the height direction. In order to insert the rotary body 300 in the main body 100, an upper portion of the lateral wall 110 including the projection rib 120 is separable from a lower portion of the main body 100.

FIG. 2 includes a perspective view showing a bottom surface of the rotary body 300. As shown therein, the bottom surface of the dispenser 310 is flat and a discharging skirt is shaped like a circle. Further, a plurality of guide grooves 311 are formed on the bottom surface from the discharging skirt in an acute direction to a moving direction of the discharging skirt. FIG. 2 shows the guide grooves 311 of when the dispenser 310 rotates counterclockwise.

Further, the rotary body 300 has an inclined portion 305 inclined outward along a region which extends from the inside of the cylindrical portion 350 to the bottom surface of the dispenser 310. Therefore, the rhinestones accommodated in the rotary body 300 can naturally flow toward the bottom surface of the dispenser 310 as the rotary body 300 rotates. Further, the inclined portion 305 includes an agitating projection 307 for more actively moving the rhinestones.

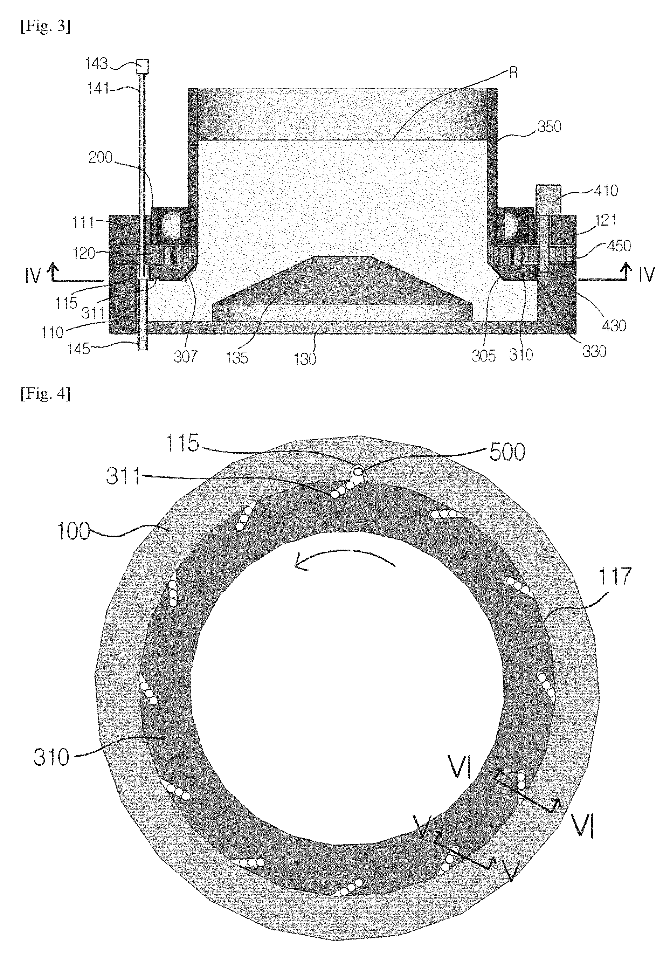

FIG. 3 is a cross-section view taken along line III-III of FIG. 1. As shown in FIG. 3, the rotary body 300 is rotatably supported on the main body 100 by the bearing 200 installed on the projection rib 120. Further, an outer diameter of the dispenser 310 is arranged leaving a little space from an inner diameter of the lateral wall 110. Further, a top surface of the dispenser 310 is arranged leaving a little space from a bottom surface of the projection rib 120.

The gear 330 is positioned in the height direction corresponding to the position of the projection rib 120, and engaged with the pinion 450 accommodated in the pinion receiver 121. The pinion 450 is connected to the driving motor 410 by a driving shaft 430 extended in the height direction, and is driven to rotate by the driving motor 410.

The dispenser 310 is placed under the projection rib 120, and spaced apart at a predetermined distance from the bottom 130. The outer side of the discharging skirt in the radial direction is mostly surrounded with the lateral wall 110, leaving a little gap therebetween. However, a certain portion of the lateral wall 110 is partially opened. In other words, the lateral wall 110 includes a discharge preventing wall 117 adjacent to the discharging skirt and preventing the rhinestones from being discharged from the guide grooves 311, and a discharging portion 115 spaced apart at a predetermined distance from the discharging skirt and formed outward in the radial direction so that the rhinestone 500 can be discharged from the guide groove 311. The discharging portion 115 receives the rhinestone 500 discharged from the guide groove 311.

Thus, the rhinestones 500 received in the guide grooves 311 are prevented by the discharge preventing wall 117 from being separated from the guide grooves 311 while rotating, and discharged at a predetermined position, i.e. at only the discharging portion 115.

In this embodiment, the lateral wall 110 serves as the discharge preventing wall 117 and the discharging portion 115, but not limited thereto. Alternatively, elements serving as the discharge preventing wall 117 and the discharging portion 115 may be additionally provided under the projection rib 120 by increasing the diameter of the main body 100.

The rhinestones 500 discharged from the dispenser 310 to the discharging portion 115 are received in a receiver. The receiver includes a guide tube 145 provided below the discharging portion 115, and a suction nozzle tube 141 placed above the discharging portion 115.

The guide tube 145 is shaped like a pipe extended in the height direction, placed below the discharging portion 115, and supported on the main body 100. The guide tube 145 is extended downward and communicates with the outside under the main body 100. The guide tube 145 has an inner diameter larger than the diameter of the rhinestone 500. For example, the guide tube 145 has an inner diameter larger by 1.1 times to 1.2 times than the diameter of the rhinestone 500.

The suction nozzle tube 141 is shaped like a pipe extended in the height direction, placed above the discharging portion 115, and supported on a nozzle tube moving portion (not shown). The suction nozzle tube 141 may move up and down in height direction by the nozzle tube moving portion. The suction nozzle tube 141 has a diameter smaller than the diameter of the rhinestone. A compressor 143 for sucking air through the suction nozzle tube 141 is provided in an upper end portion of the suction nozzle tube 141, and thus an air-sucking state at a lower end portion of the suction nozzle tube 141 is maintained by the compressor 143.

The suction nozzle tube 141 moves between a standby position at which the lower end portion thereof is placed above the rhinestone fed from the guide groove 311, and an attaching position at which the rhinestone sucked at the standby position is attached to the adhesive sheet placed under the main body 100.

With this structure, a lot of rhinestones are supplied to the main body 100 through the inside of the rotary body 300, and thus accommodated up to 'R' of the cylindrical portion 350 as well as the inside of the main body 100. In this way, many rhinestones R are accommodated higher than the height of the dispenser 310 and press the bottom surface of the dispenser 310.

If the rhinestones 500 are filled higher than the bottom surface of the dispenser 310, the rhinestones 500 positioned higher than the bottom surface of the dispenser 310 tend to move downward by their own weight and thus the rhinestones placed beneath the dispenser 310 press the bottom surface of the dispenser 310. Further, spaces caused as the rhinestones 500 are discharged by rotation of the dispenser 310 are filled with the rhinestones 500 by the weight of the rhinestones 500 positioned higher than the bottom surface of the dispenser 310. Thus, the bottom surface of the dispenser 310 is continuously pressed by the rhinestones.

Here, the rhinestones 500 may be compared to very small sands in light of the present feeding apparatus. Thinking this way, it will be easy to understand a principle that the rhinestones press the bottom surface.

By the way, the bottom 130 may have a structure of moving up and down to press the rhinestones 500 against the bottom surface of the dispenser 310. Besides, such a contrived structure may be replaced by preparing a separate element on the outer side of the lateral wall 110 in the radial direction and connecting it with the inside of the main body 100 in order to continuously feed the rhinestones 500.

In such a state that the rhinestones are pressing the bottom surface of the dispenser 310, the dispenser 310 is driven by the driving motor 410 to rotate with respect to the axial line of the height direction. As the dispenser 310 rotates, the rhinestones received in the guide grooves 311 are fed in sequence to the discharging portion 115. This will be described in detail with reference to FIG. 4.

FIG. 4 is a cross-section view taken along line IV-IV of FIG. 3. As shown in FIG. 4, the dispenser 310 is shaped like a ring, and has the flat bottom surface and a circular edge, i.e. the discharging skirt. On the bottom surface of the dispenser 310, a plurality of guide grooves 311 are formed from the discharging skirt at predetermined intervals in an acute direction to a counterclockwise rotational moving direction of the discharging skirt.

The discharging skirt rotationally moves within a plane including the bottom surface along a tangential direction as the rotary body 300 rotates. Then, the rhinestones 500 pressing the bottom surface move by friction with the bottom surface and naturally enter the guide grooves 311. The rhinestones 500 received in the guide grooves 311 are also rotationally moved along the rotational movement of the dispenser 310. Further, the rhinestone 500 in the guide groove 311 is discharged to the discharging portion 115 by centrifugal force and inertial force when it approaches the discharging portion 115.

The rhinestone 500 discharged to the discharging portion 115 is caught by the end portion of the suction nozzle tube 141 by the suction of the suction nozzle tube 141 placed above the rhinestone 500. Further, the suction nozzle tube 141 moves up and down to pass through the guide tube 145, so that the rhinestone can be adhered to an adhesive sheet (not shown) placed under the main body 100.

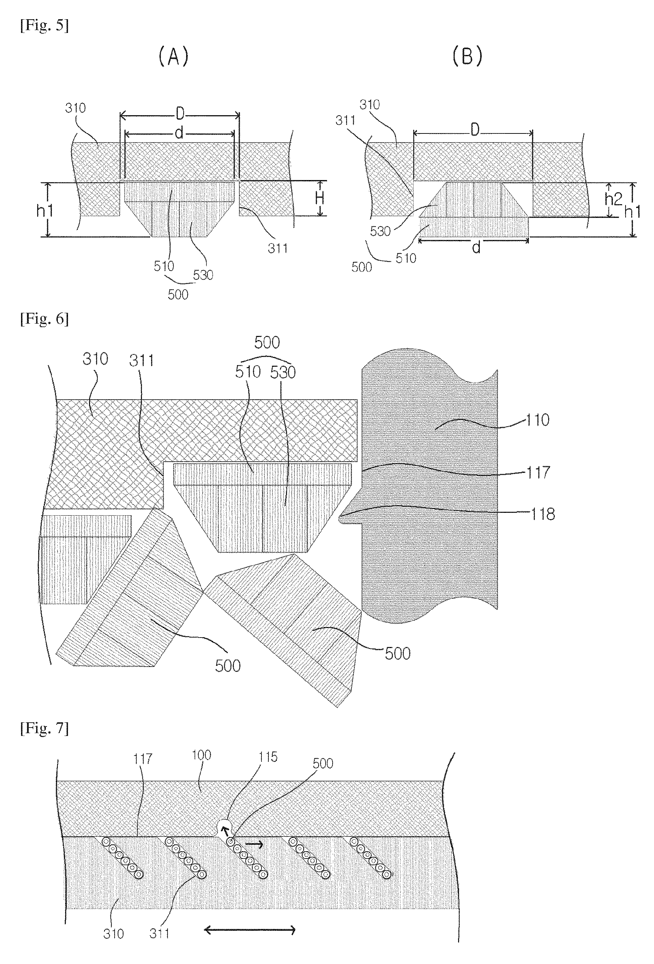

FIG. 5(A) and (B) are cross-section views taken along line V-V of FIG. 4. FIG. 5 (A) and (B) show that the rhinestones 500 are stably and unstably received in the guide grooves 311, respectively. The rhinestone 500 includes an adhesive flat portion 510, and a protruding end portion 530 formed at an opposite side to the adhesive flat portion 510. The adhesive flat portion 510 has an adhesive flat surface at a free end side thereof, and glue to be melt by heat is applied to the adhesive flat surface.

As shown in FIG. 5 (A) and (B), the width D of the guide groove 311 is larger than the diameter d of the adhesive flat portion 510 of the rhinestones 500, and the depth H of the guide groove 311 is smaller than the height h1 from the adhesive flat portion 510 of the rhinestone 500 to the protruding end portion 530. At this time, the width D of the guide groove 311 may be larger by 0.1 to 0.3 times than the diameter d of the adhesive flat portion 510, and the depth H of the guide groove 311 may be about 60∼70% of the height of the rhinestone 500 or approximate the height h2 of the protruding end portion 530.

With this structure, the rhinestone 500 may be stably accommodated in the guide groove 311 with its adhesive flat surface facing upward as shown in FIG. 5 (A), or may be unstably accommodated in the guide groove 311 with its protruding end portion 530 facing upward as shown in FIG. 5(B).

Thus, the rhinestones 500, of which the protruding end portions 530 face upward as shown in FIG. 5 (B), are separated from the guide grooves 311 by friction with many rhinestones 500 pressing the bottom surface of the dispenser 310 as the dispenser 310 rotates, whereas the rhinestones 500, of which the adhesive flat surface face upward as shown in FIG. 5 (A), are not separated from the guide grooves 311 regardless of the friction with many rhinestones 500 since they are stably received in the guide grooves 311

FIG. 6 illustrates another embodiment of a discharge preventing wall 117 based on the cross section taken along line VI-VI of FIG. 4. As shown in FIG. 6, the discharge preventing wall 117 may be formed with an inward taper 118 for assisting the outermostly arranged rhinestones to be more stably seated among the rhinestones received in the guide grooves 311. The inward taper 118 is placed on a level with the guide groove 311, and protrudes inwardly at an angle similar to the inclined angle of the protruding end portion 530 of the rhinestone 500 received in the guide groove 311. The inward taper 118 prevents the rhinestone 500 from being separated from the guide groove 311 even though the rhinestone 500 previously received in the guide groove 311 collide with another rhinestone 500 thereunder.

FIG. 7 illustrates a rhinestone dispenser 310 according to another embodiment. As shown in FIG. 7, the discharge skirt 310 may be not circularly but straightly formed and reciprocate left and right. Referring to FIG. 7, when the dispenser 310 moves rightward, the guide grooves 311 has an acute angle to the moving direction and therefore the rhinestone 500 is discharged to the discharging portion 115 by friction with other rhinestones 500, inertial force, etc. On the other hand, when the dispenser 310 moves leftward, the rhinestones 500 are received in the guide grooves 311 or not discharged since they move in a depth direction of the guide grooves 311.

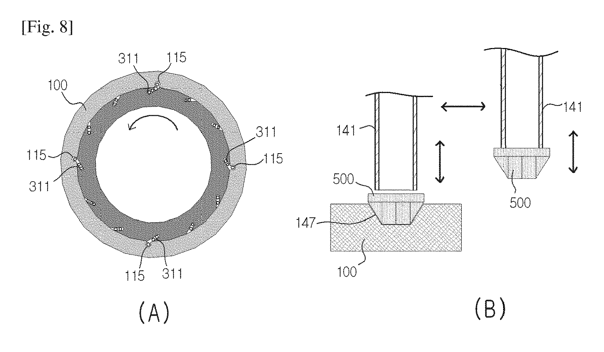

FIG. 8 (A) and (B) illustrate an apparatus for feeding rhinestones according to another embodiment. FIG. 8 (A) shows that the main body 100 is formed with a plurality of discharging portions 115. Thus, receivers 140 are respectively provided in the discharging portions 115 and a plurality of works may be performed at the same time. Here, the receiver 140 may include a suction nozzle tube 141 and/or a guide tube 145.

The receiver 140 may have a groove 147 instead of the guide tube 145 so that the rhinestone 500 can be seated on the groove 147 as shown in FIG. 8 (B). The rhinestone 500 seated on the groove 147 is caught by the suction nozzle tube 141 and moved vertically, moved horizontally and moved vertically so that the protruding end portion 530 of the rhinestone 500 can be attached to an adhesive sheet (not shown) placed under the main body 100. Further, the suction nozzle tube 141 may catch, move up and down, and rotate the rhinestone 500 to thereby attach the rhinestones to a wall.

## Claims

1. An apparatus for feeding rhinestones, each of which has an adhesive flat surface forming an adhesive surface and a protruding end portion formed at an opposite side to the adhesive flat surface, the apparatus comprising:
a main body;
a dispenser which is supported on the main body, comprises a flat bottom surface and a discharging skirt, is driven to move the discharging skirt for discharging within a plane comprising the bottom surface along a tangential direction of the discharging skirt, and comprises a guide groove on the bottom surface in an acute direction to a moving direction the discharging skirt from the discharging skirt, in which a width of the guide groove is larger than a diameter of the adhesive flat surface of the rhinestone and a depth of the guide groove is smaller than a height of the protruding end portion;
a rhinestone feeder which presses and feeds the rhinestones toward the bottom surface of the dispenser; and
a driver which drives the dispenser.

2. The apparatus for feeding rhinestones according to claim 1, wherein the discharging skirt is circular, and the dispenser rotates with respects to a center axis of the discharging skirt.

3. The apparatus for feeding rhinestones according to claim 1, wherein the main body comprises a discharge preventing wall adjacent to the discharging skirt and preventing the rhinestones from being discharged, and the discharge preventing wall comprises at least one discharging portion for allowing the rhinestone to be discharged through the discharging skirt along the guide groove.

4. The apparatus for feeding rhinestones according to claim 3, wherein the discharging portion comprises a receiver to receive a rhinestone discharged from the dispenser.

5. The apparatus for feeding rhinestones according to claim 4, wherein the receiver comprises a guide tube to guide the rhinestone to move down.

6. The apparatus for feeding rhinestones according to claim 4, wherein the receiver comprises a suction nozzle tube for catching the rhinestone from above, a compressor for sucking air through the suction nozzle tube, and a nozzle tube moving portion to move the suction nozzle tube.
